# EUROPÄISCHE PATENTSCHRIFT

(11) **EP 3 115 322 B1**
(45) Veröffentlichungstag und Bekanntmachung des Hinweises auf die Patenterteilung: **06.03.2019**
(21) Anmeldenummer: 16171026.4
(22) Anmeldetag: 24.05.2016
(51) Int. Cl.: B65G 47/248, B65G 47/31, B65G 47/68, B65G 59/08, B65G 59/12

(54) **VERFAHREN UND VORRICHTUNG ZUM DEPALETTIEREN VON REIFEN**
METHOD AND DEVICE FOR DEPALLETIZING TIRES
PROCEDE ET DISPOSITIF DESTINES A LA DEPALETTISATION DE PNEUS

(30) Priorität: 09.07.2015 DE 102015111098
(43) Veröffentlichungstag der Anmeldung: 11.01.2017
(73) Patentinhaber: Alfons Brass Logistik GmbH & Co. KG, 34497 Korbach (DE)
(72) Erfinder: Brass, Markus, 59964 Medebach-Oberschledorn (DE); Winterberg, Peter, 59964 Medebach-Oberschledorn (DE); Thoma, Guido, 34454 Bad Arolsen (DE)
(74) Vertreter: Ostermann, Thomas

(56) Entgegenhaltungen:
- EP-A1- 0 133 679
- WO-A1-99/03765
- WO-A1-2014/041312
- DE-A1- 3 243 203
- DE-A1-102008 037 356
- DE-U1-202013 005 786
- JP-A- S6 031 443
- JP-A- 2010 269 871
- KR-B1- 910 007 521
- US-A- 4 792 049

## Beschreibung

Die Erfindung betrifft ein Verfahren zum Depalettieren von Reifen, die auf einem Träger bereitgestellt werden.

Ferner betrifft die Erfindung eine Depalettiervorrichtung für Reifen.

Aus der DE 10 2007 026 956 A1 ist ein robotergestütztes Depalettierverfahren von Reifen bekannt, bei dem die Reifen jeweils von einem Greifwerkzeug erfasst und entsprechend einer festgelegten Bewegungsbahn zu einem Ladungsträger bewegt werden, an dem die Reifen abgelegt werden. Hierdurch wird das bisher manuell durchgeführte Depalettieren der Reifen automatisiert. Nachteilig an dem bekannten Verfahren ist jedoch, dass der Steuerungsaufwand relativ groß ist. Ferner ist der Durchsatz der depalettierten Reifen begrenzt, da die Reifen nur sequenziell von dem Greifwerkzeug erfasst werden können.

Aus der KR 910 007 521 B1 ist eine Depalettiervorrichtung bekannt, mittels dessen Gebinde von Reifen durch seitliches Verschwenken vereinzelt werden. Die Zuführung zu einer solchen Vereinzelungsstation erfolgt über Förderbänder, die im Wesentlichen in der gleichen Höhe angeordnet sind.

Aus der DE 32 43 203 A1 sind ein Verfahren zum Depalettieren von Reifen nach dem Oberbegriff des Anspruchs 1 und eine Depalettiervorrichtung für Reifen nach dem Oberbegriff des Anspruchs 5 bekannt. Insbesondere ist aus dem Dokument ein Verfahren zum Depalettieren von Reifen bzw. eine Depalettiervorrichtung bekannt, bei der Reifen über einen Labyrinth-Förderweg vereinzelt werden. Die Förderbahnen sind unterschiedlich zueinander orientiert angeordnet, wobei insbesondere Förderbahnen bzw. Fördermittel in Förderrichtung geneigt angeordnet sind. Zur Vereinzelung weist das in Förderrichtung geneigte Fördermittel Mitnehmer auf, mittels derer in einem Behälter abgelagerte Reifen aus demselben ausgehoben werden können. Das Fördermittel ist als eine endlos geführte Kette ausgebildet, die über Umlenkräder geführt ist.

Aufgabe der vorliegenden Erfindung ist es daher, ein Verfahren zum Depalettieren von Reifen sowie eine Depalettiervorrichtung anzugeben, so dass eine Mehrzahl von ungeordneten oder teilgeordneten Reifen automatisiert entladen werden können, wobei der Steuerungsaufwand relativ gering und der Reifendurchsatz relativ hoch ist.

Zur Lösung dieser Aufgabe weist das erfindungsgemäße Verfahren die Merkmale des Patentanspruchs 1 auf.

Nach der Erfindung wird einer Mehrzahl von Reifen ein Labyrinth-Förderweg aufgezwungen, der dazu führt, dass die Reifen vereinzelt, also ohne dass sie übereinander liegen, für insbesondere logistische Zwecke bereitgestellt werden können. Der Labyrinth-Förderweg beinhaltet mehrere Förderbahnen, die sich hinsichtlich ihrer Lage und Richtung bzw. Orientierung im Raum sowie gegebenenfalls Breite und Länge voneinander unterscheiden. Durch gezieltes Aneinanderreihen von diesen Förderwegen können nach und nach die Reifen sicher vereinzelt werden, bevor sie beispielsweise auf einem Transportband in Förderrichtung hintereinanderliegend bereitgestellt werden. Der Labyrinth-Förderweg weist eine Mehrzahl von erzwungenen Richtungsänderungen beim Transport der Reifen auf, was betriebssicher zur Vereinzelung der Reifen führt. Nach des erfindungsgemäßen Verfahrens werden die Reifen auf mit unterschiedlicher Fördergeschwindigkeit eingestellten Förderbahnen und/oder Förderbahnsegmenten gefördert, was zu einer Entzerrung bzw. Vereinzelung der Reifen führt. Die Fördergeschwindigkeit der Förderbahnen bzw. Förderbahnsegmenten steigt in Förderrichtung an.

Nach einer bevorzugten Ausführungsform des erfindungsgemäßen Verfahrens werden die Mehrzahl von Reifen auf eine vorzugsweise untere erste Förderbahn geschüttet, von der sie über in Förderrichtung zu der vorhergehenden Förderbahn unterschiedlich orientierten weiteren Förderbahnen bis hin zu einer letzten Förderbahn gefördert werden, in der eine vollständige Vereinzelung mittels einer quer zur Förderrichtung der vorhergehenden Förderbahn geneigten Förderbahn erfolgt. Der Neigungswinkel dieser Förderbahn ist so groß, dass bei gestapelten Reifen nur der untere Reifen auf der Förderbahn verbleibt, während der obere Reifen von der geneigten Förderbahn herunterfällt, beispielsweise auf eine in Förderrichtung hintere bzw. förderstromaufwärts gelegenen Förderbahn, von der aus der Reifen wieder über weitere Förderbahnen der geneigten Bahn zugeführt wird.

Alternativ kann die Vereinzelung auch mittels einer beabstandet zu einem förderstromabwärts gelegenen Ende einer Förderbahn angeordneten Trennförderelement erfolgen, deren Abstand zu dieser förderstromaufwärts gelegenen Förderbahn derart bemessen ist, dass sequenziell lediglich ein Reifen durch den so gebildeten Trennspalt hindurchgefördert werden kann. Ein gegebenenfalls auf dem Reifen gestapelter weiterer Reifen kann gegebenenfalls über eine Trennförderbahn einer weiteren Förderbahn zugeführt werden. Die förderstromabwärts zu dem Trennförderelement bzw. Trennspalt gelegenen Förderbahnen fördern somit stets ungestapelte Reifen.

Zur Lösung der Aufgabe weist die Erfindung die Merkmale des Patentanspruchs 5 auf.

Der besondere Vorteil der erfindungsgemäßen Depalettiervorrichtung besteht darin, dass lediglich aufgrund unterschiedlich zueinander angeordneter und/oder orientierter in Förderrichtung benachbarter Förderbahnen nach und nach eine sichere Vereinzelung der Reifen gewährleistet ist. Die mehreren Förderbahnen bilden einen Labyrinth-Förderweg, der aufgrund von Richtungsänderungen des Förderweges zu einer Vereinzelung der Reifen führt. Vorzugsweise weisen alle in Förderrichtung benachbarte, das heißt sequenziell aufeinander folgende Förderbahnen, eine unterschiedliche Orientierung zu der förderaufwärtsgelegenen Förderbahn auf.

Nach der erfindungsgemäßen Depalettiervorrichtung ist zur Vereinzelung der Reifen eine quer zur Förderrichtung geneigte Förderbahn vorgesehen, deren Neigungswinkel so groß ist, dass nur ein unterer bzw. unmittelbar auf der geneigten Förderbahn aufliegender Reifen eines Stapels von Reifen auf der geneigten Förderbahn verbleibt, während ein auf dem unteren Reifen liegender weiterer Reifen seitlich zur Förderrichtung abfällt, auf eine untere Förderbahn, von der aus der Reifen erneut den Labyrinth-Förderweg durchläuft. Nach der erfindungsgemäßen Depalettiervorrichtung ist eine Vereinzelungsstation mit einer quer zur Förderrichtung geneigten Förderbahn vorgesehen. Der Neigungswinkel ist derart bemessen, dass bei Vorliegen eines Stapels von Reifen nur der unterste Reifen, also der unmittelbar auf der geneigten Förderbahn aufliegende Reifen, weitergefördert wird. Der obere Reifen eines Stapels von Reifen verlässt seitlich aufgrund seines Eigengewichtes die geneigte Förderbahn und fällt auf die untere Förderbahn.

Nach einer Weiterbildung der Erfindung ist der geneigten Förderbahn untenseitig eine Führungseinrichtung zur Führung ausschließlich des unmittelbar auf der geneigten Förderbahn aufliegenden Reifens zugeordnet. Hierdurch erfolgt eine sichere Führung der unmittelbar auf der geneigten Förderbahn aufliegenden Reifen bzw. der unteren Reifen eines Stapels von Reifen. Die Höhe der Führungseinrichtung ist so bemessen, dass ausschließlich Reifen in einer Ebene, nämlich unmittelbar auf der geneigten Förderbahn aufliegende Reifen, in Förderrichtung weitergeführt werden.

Nach einer Weiterbildung der Erfindung weist die Depalettiervorrichtung eine Schüttstation zum Schütten der Mehrzahl von in einem Ladungsträger gesammelten Reifen auf eine untere Förderbahn auf. Um die Anzahl der Stapel von Reifen auf der unteren Förderbahn nach dem Schütten zu begrenzen, ist vorzugsweise zwischen der Schüttstation und der unteren Förderbahn eine Vortrennstation vorgesehen, die Mittel aufweist zum Vortrennen der Mehrzahl von Reifen. Die untere Förderbahn dient als eine Entzerrstation, entlang derer die Reifen, die als flachzylindrisches Stückgut (Gegenstand) ausgebildet sind, in ihrer Erstreckungsrichtung verteilt werden. An die untere Förderbahn schließt sich in Förderrichtung an dieselbe eine Steigungsstation mit einer unter einem Ansteigwinkel ansteigenden Förderbahn sowie eine Querförderstation an, mittels derer die Reifen um einen 90°-Winkel umgelenkt werden. Gegebenenfalls können sich weitere Steigungsstationen bzw. Querförderstationen in beliebiger Reihenfolge anschließen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Fig. 1: eine perspektivische Draufsicht auf eine Depalettiervorrichtung nach einer ersten Ausführungsform,
- Fig. 2: eine seitliche Darstellung einer unteren Förderbahn der Depalettiervorrichtung gemäß Figur 1,
- Fig. 3a: eine perspektivische Seitenansicht eines ersten Abschnitts einer Depalettiervorrichtung nach einer zweiten Ausführungsform,
- Fig. 3b: eine perspektivische Seitenansicht eines zweiten Abschnitts der Depalettiervorrichtung nach der zweiten Ausführungsform, wobei der zweite Abschnitt in Förderrichtung vor dem in Figur 3a dargestellten ersten Abschnitt der Depalettiervorrichtung angeordnet ist,
- Fig. 4: eine perspektivische Darstellung einer Vortrennstation für die Depalettiervorrichtung nach der zweiten Ausführungsform.

Eine Depalettiervorrichtung für Reifen bzw. andere flachzylindrische Gegenstände, die jeweils als flache Stückgüter ausgebildet sind, ermöglicht das Vereinzeln von in einem Ladungsträger bzw. in einem Behälter oder in einer Gitterbox vorliegenden Mehrzahl von flachen Stückgütern, die beispielsweise auf einem Förderband sequenziell und ungestapelt zur weiteren Verarbeitung insbesondere für logistische Zwecke bereitgestellt werden sollen.

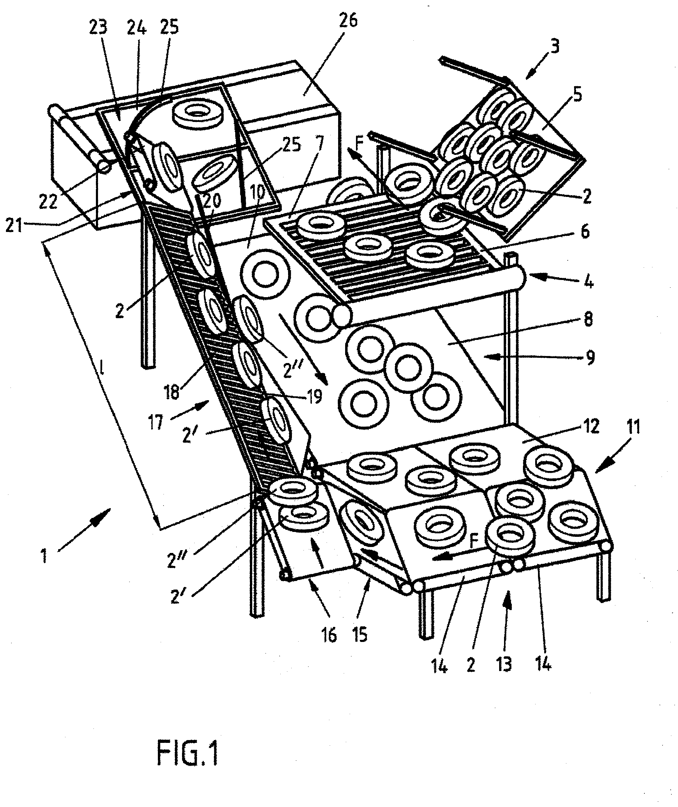

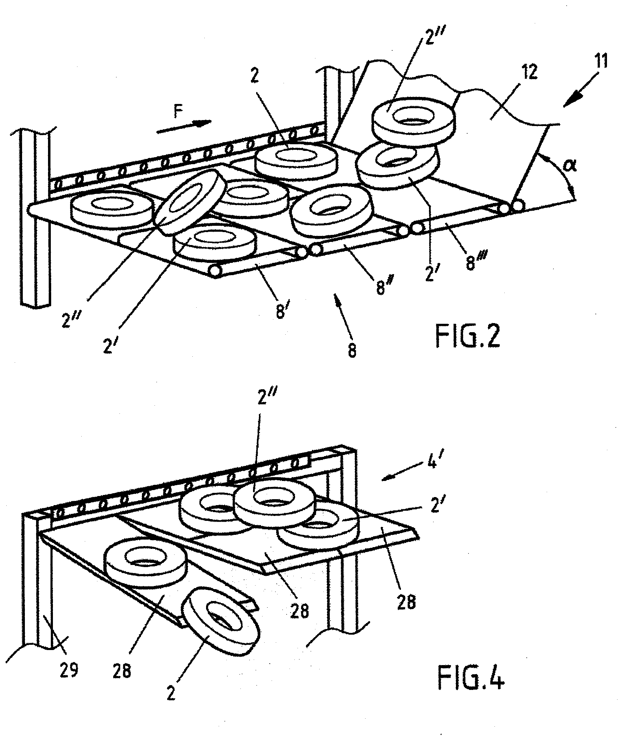

Nach einer ersten Ausführungsform einer Depalettiervorrichtung 1 gemäß den Figuren 1 und 2 ist für das flache Stückgut, nämlich für die Mehrzahl von Reifen 2, ein Labyrinth-Förderweg vorgesehen, der die Reifen 2 entlang einer Anzahl von unterschiedlich orientierter, in Förderrichtung F hintereinander angeordneter Förderbahnen und/oder mit unterschiedlicher Fördergeschwindigkeit betriebener, in Förderrichtung F hintereinander angeordneter Förderbahnen transportiert, bis die Reifen 2 vollständig entstapelt sind bzw. vereinzelnd bereitgestellt werden können.

Die Depalettiervorrichtung 1 kann optional eine Schüttstation 3 umfassen, mittels derer die Mehrzahl von Reifen 2 auf eine Vortrennstation 4 geschüttet werden. Die Schüttstation 3 umfasst Hubmittel, mittels derer ein die Mehrzahl von Reifen 2 tragender Behälter 5 angehoben und zur Seite so weit gekippt wird, dass die Mehrzahl von Reifen 2 auf die Vortrennstation 4 fällt.

Die Vortrennstation 4 umfasst eine zu einer Horizontalebene geneigte Förderbahn 6, die die Reifen 2 aufnimmt und in Förderrichtung F zu einem förderstromabwärts gelegenen unteren Ende 7 der Förderbahn 6 transportiert. An diesem unteren Ende 7 der Förderbahn 6 werden die Reifen 2 an eine Förderbahn 8 einer Entzerrstation 9 übergeben, die sich in vertikaler Richtung unterhalb der Vortrennstation 4 befindet. Die Vortrennstation 4 befindet sich zwischen der Schüttstation 3 und der Entzerrstation 9. In Abhängigkeit von der Neigung der Förderbahn 6 der Vortrennstation 4 kann die Anzahl der auf die Förderbahn 8 der Entzerrstation 9 fallenden Reifen 2 dosiert werden. Mit steigender Neigung der Förderbahn 6 steigt die Anzahl der Reifen 2 pro Zeiteinheit, die an die Entzerrstation 9 übergeben wird. Die Förderbahn 6 der Vortrennstation 4 ist als eine Rollenbahn mit einer Mehrzahl von quer zur Förderrichtung F verlaufenden und auf einer Achse drehbar gelagerten Rollen ausgebildet, so dass die Reifen 2 aufgrund ihres Eigengewichtes zu dem unteren Ende 7 der Förderbahn 6 bewegt werden.

Im vorliegenden Ausführungsbeispiel ist die Förderbahn 6 der Vortrennstation 4 vertikal oberhalb der Förderbahn 8 der Entzerrstation 9 angeordnet, und zwar vorzugsweise so, dass das untere Ende 7 der Förderbahn 6 vertikal oberhalb eines ersten Endbereiches 10 der Förderbahn 8 angeordnet ist. Auf diese Weise werden die Reifen 2 an die Entzerrstation 9 Endbereich 10 übergeben und unter annährend 180°-Umkehrung der Förderrichtung F weiter transportiert.

Wie besser aus Figur 2 ersichtlich ist, besteht die Förderbahn 8 aus drei Förderbahnsegmenten 8', 8", 8"', die jeweils mit einer unterschiedlichen Fördergeschwindigkeit betrieben werden. Die Förderbahn 8 bzw. die Förderbahnsegmente 8', 8", 8'" sind jeweils als Förderbänder enthaltend jeweils ein Endlosband, das unter Bildung eines Ober- und Untertrums in Förderrichtung beabstandete Umlenkrollen umspannt. Zumindest eine der Umlenkrollen ist mit einem Antrieb gekoppelt, so dass der Obertrum des Förderbandes 8 in Förderrichtung F zum Transport der Reifen 2 bewegt wird.

Damit eine Entzerrung bzw. Verteilung der Reifen 2 auf der Förderbahn 8 erzielt wird, werden die Förderbahnsegmente 8', 8", 8'" in Förderrichtung F mit einer größeren Fördergeschwindigkeit betrieben. Beispielsweise wird das Förderbahnsegment 8' mit einer ersten Fördergeschwindigkeit, das sich in Förderrichtung F anschließende zweite Fördersegment 8" mit einer im Vergleich zur ersten Fördergeschwindigkeit erhöhten zweiten Fördergeschwindigkeit und das sich an das zweite Förderbahnsegment 8" in Förderrichtung F anschließende dritte Förderbahnsegment 8'" mit einer dritten Geschwindigkeit betrieben, die größer ist als die erste Fördergeschwindigkeit und die zweite Fördergeschwindigkeit.

Gegebenenfalls kann die Förderbahn 8 auch lediglich zwei Förderbahnsegmente bzw. mehr als drei Förderbahnsegmente aufweisen.

Die Förderbahnsegmente 8', 8", 8''' verlaufen vorzugsweise in horizontaler Richtung, wobei die Obertrums der Förderbahnsegmente 8', 8", 8'" bündig zueinander bzw. in einer gemeinsamen horizontalen Ebene zueinander verlaufen.

Dem in Förderrichtung F vordersten Förderbahnsegment 8'" ist ein Füllstandsmesser zugeordnet, der die Zufuhr der Reifen 2 aus der Vortrennstation 4 regelt. Sollte der Füllstandsmesser eine größere Belegung des vordersten Förderbahnsegmentes 8'" im Vergleich zu den anderen Förderbahnsegmenten 8', 8" feststellen, wird die Laufrichtung der Förderbahnsegmente 8', 8", 8''' umgekehrt, so dass die auf der Förderbahn 8 aufliegenden Reifen 2 entgegen der eigentlichen Förderrichtung F rückwärts bewegt werden. In diesem Fall ist die Fördergeschwindigkeit des ersten Förderbahnsegmentes 8' größer als die Fördergeschwindigkeit der beiden anderen Förderbahnsegmente 8", 8"'. Die Fördergeschwindigkeit des zweiten Förderbahnsegmentes 8" ist größer als die Fördergeschwindigkeit des dritten Förderbahnsegmentes 8"'. Diese Umkehrung der Laufrichtung erfolgt für ein voreingestelltes Zeitintervall. Eine nochmalige Umkehrung der Laufrichtung führt zur Förderung der Reifen 2 wieder in Förderrichtung F.

Förderstromabwärts schließt sich an die Entzerrstation 9 eine Steigungsstation 11 mit einer ansteigenden Förderbahn 12 an. Die ansteigende Förderbahn 12 verläuft in einem spitzen Anstiegswinkel α zu einer horizontalen Ebene bzw. zu der horizontal verlaufenden unteren Förderbahn 8. Dieser Anstiegswinkel α ist relativ groß und kann in einem Bereich zwischen 60° und 80° liegen. Durch den relativ steilen Anstiegswinkel α wird ein Entstapeln der Reifen 2 bewirkt. Der Anstiegswinkel α ist so groß gewählt, dass ein unterer Reifen 2' eines Stapels von Reifen 2 sicher weitertransportiert werden kann einerseits und ein oberer Reifen 2" des Stapels aufgrund der versetzten Anordnung zu dem unteren Reifen 2' und seines Eigengewichtes von dem unteren Reifen 2' entfernt wird andererseits. Die Steigungsstation 11 ermöglicht somit, dass zumindest ein Teil von gestapelten Reifen bzw. übereinanderliegenden Reifen 2 voneinander getrennt bzw. vereinzelt weitergefördert werden kann.

In Förderrichtung F schließt sich an die Steigungsstation 11 eine Querförderstation 13 an mit einer Förderbahn 14, mittels derer die Reifen 2 quer zur bisherigen Förderrichtung F weitertransportiert werden. Wenn die Förderbahn 14 der Querförderstation 13 - wie bei dieser Ausführungsform - in horizontaler Richtung verläuft, ergibt sich eine Förderrichtungsänderung in einer vertikalen Ebene um einen spitzen Winkel und in einer horizontalen Ebene um einen rechten Winkel. Gegebenenfalls kann die Richtungsänderung in der horizontalen Ebene auch unter einem spitzen oder überstumpfen Winkel erfolgen.

An die Querförderstation 13 schließt sich eine weitere Steigungsstation 15 sowie eine weitere Querförderstation 16 an, so dass die Reifen 2 in einer horizontalen Ebene um 180° umgelenkt und vertikal auf eine höhere horizontale Ebene angehoben werden. An die weitere Querförderstation 16 schließt sich in Förderrichtung F eine Vereinzelungsstation 17 mit einer quer zur Förderrichtung F geneigten Förderbahn 18 an. In der Vereinzelungsstation 17 erfolgt eine endgültige Vereinzelung der Reifen 2, wobei der Vereinzelungsgrad der Reifen 2 in der Vereinzelungsstation 17 wesentlich größer sein kann als in den vorhergehenden Stationen. Die geneigte Förderbahn 18 ist zur Förderbahn 8 der Entzerrstation 9 hin geneigt ausgebildet, so dass von aufeinander gestapelten Reifen 2 der obere Reifen 2" von der geneigten Förderbahn 18 zu der Förderbahn 8 hinunterfällt, während der untere Reifen 2', der vollständig bzw. mit einer Flachzylinderseite auf der geneigten Förderbahn 18 angeordnet ist, in Förderrichtung F weitertransportiert wird.

Die geneigte Förderbahn 18 der Vereinzelungsstation 17 weist eine solche Länge I auf, dass für eine vorgegebene Anzahl von zugeführten Reifen 2 eine Entstapelung stattfindet, so dass am Ende der geneigten Förderbahn 18 ausschließlich nicht gestapelte Reifen 2 nacheinander bereitgestellt werden. Die geneigte Förderbahn 18 schließt mit einer Horizontalebene einem spitzen Neigungswinkel, im Bereich von 50° bis 70°, ein.

Die geneigte Förderbahn 18, die eine Endlosförderbahn oder mehrere sequenziell angeordneten Rollen vorsieht, weist an einer unteren Längsseite 19 eine Führungseinrichtung 20 zur Führung ausschließlich unmittelbar auf der geneigten Förderbahn 18 aufliegender Reifen 2 in Förderrichtung F auf. Bei gestapelten Reifen 2', 2" erfolgt keine Führung des oberen Reifens 2", so dass dieser Reifen 2" aufgrund seines Eigengewichtes hinunterfällt bzw. die geneigte Förderbahn 18 verlässt. Die heruntergefallenen Reifen 2" fallen auf die Förderbahn 8, so dass sie erneut den Labyrinth-Förderweg durchlaufen, und zwar so lange, bis sie als unterer Reifen 2' eines Stapels von Reifen 2 oder als einzelne Reifen 2 auf der geneigten Förderbahn 18 liegend einen förderstromabwärts gelegenen Ende derselben zugeführt werden. Die Führungseinrichtung 20 kann beispielsweise durch eine Rollenführung gebildet sein.

In Förderrichtung F vorne schließt sich an die Vereinzelungsstation 17 eine Wendestation 21 an, die die einzelnen Reifen 2 auf die Anordnung eines Identifikationsmerkmals hin überprüft und gegebenenfalls zu einer Wendung des Reifens 2 um 180° führt. Als Identifikationsmerkmal weist jeder Reifen 2 üblicherweise einen Barcode auf. Damit dieser Barcode auslesbar ist, muss dieser auf einer der Förderbahn abgewandten Seite, also oben, angeordnet sein. In Abhängigkeit von der festgestellten Lage des Barcodes der Reifen 2 werden dieselben entweder ohne Wendung oder mittels 180°-Wendung weitergeführt. Hierzu weist die Wendestation 21 eine quer zur Förderrichtung F verschwenkbare Wendeplatte 22 auf. Die Drehachse der Wendeplatte 22 verläuft in Richtung der Führungseinrichtung 20.

In Förderrichtung F vor der Wendestation 22 ist eine Beladestation 23 vorgesehen, die eine relativ breite Förderbahn 24 aufweist, so dass sowohl der nicht gewendete, als auch der gewendete Reifen 2 aufgenommen werden kann. Die Beladestation 23 weist Führungen 25 auf, so dass die Reifen 2 in Richtung einer weiteren Förderbahn 26, die vorzugsweise als Teleskopgurtförderer ausgebildet ist, zugeführt werden. Auf diesem Teleskopgurtförderer 26 werden die Reifen 2 ungestapelt und in einem Abstand zueinander hintereinander von der Beladestation 23 übergeben und dann weitergefördert, so dass sie beispielsweise manuell erfasst werden können zum Beladen eines Containers oder dergleichen.

Die Förderbahn 8 der Entzerrstation 9 bildet eine untere Förderbahn. Eine Förderbahn der weiteren Querstation 16 bildet eine obere Förderbahn in der oberen Ebene der Depalettiervorrichtung 1 bzw. eine Beschickungsbahn für die Vereinzelungsstation.

Nach einer nicht dargestellten alternativen Ausführungsform der Erfindung können auch lediglich eine einzige Steigungsstation 11 und eine einzige Querförderstation 13 vorgesehen sein. In diesem Fall müsste zwischen der Vereinzelungsstation 17 und der Entzerrstation 9 eine Zuführbahn vorgesehen sein, so dass die von der Vereinzelungsstation 17 entfernten gestapelten Reifen 2" wieder dem Labyrinth-Förderweg zugeführt werden können.

Nach einer nicht dargestellten alternativen Ausführungsform der Erfindung kann die Depalettiervorrichtung 1 mehr als zwei Steigungsstationen 11, 15 und/oder Querförderstationen 16 aufweisen.

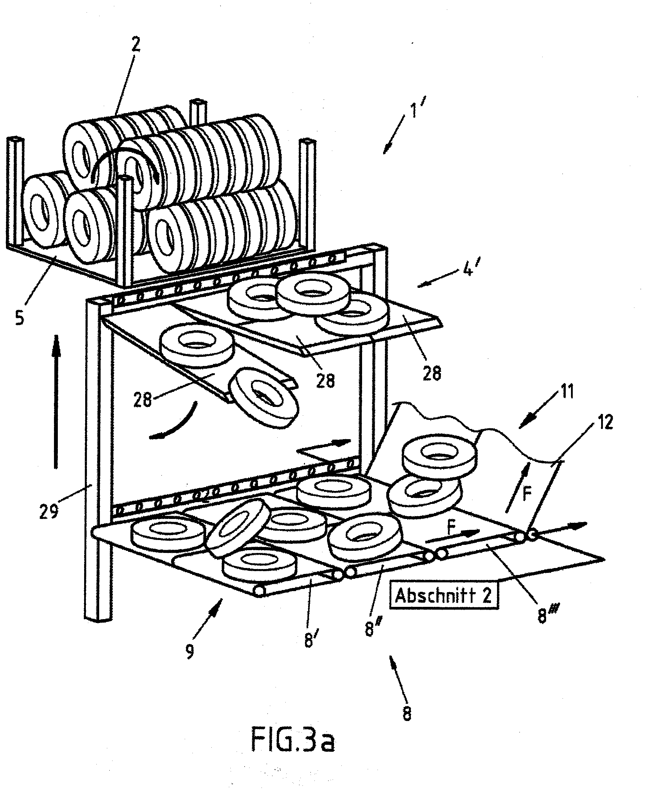

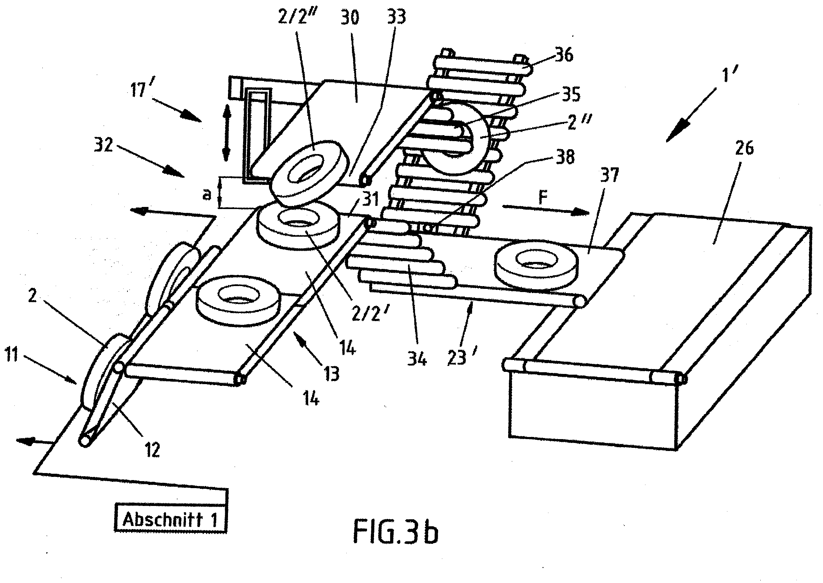

Nach einer weiteren Ausführungsform einer Depalettiervorrichtung 1' gemäß den Figuren 3a und 3b erfolgt eine Vereinzelung der Reifen 2 mittels einer im Vergleich zur Depalettiervorrichtung 1 modifizierten Vortrennstation 4', einer modifizierten Beladestation 23' und einer modifizierten Vereinzelungsstation 17'. Die anderen Stationen stimmen im Wesentlichen mit den Stationen der Depalettiervorrichtung 1 nach der ersten Ausführungsform überein, wobei aus darstellerischen Vereinfachungsgründen die Wendestation in der Figur 3b weggelassen worden ist.

Zur besseren Darstellung ist die Depalettiervorrichtung 1' in einem ersten Abschnitt gemäß Figur 3a und in einem zweiten Abschnitt gemäß Figur 3b dargestellt, wobei der zweite Abschnitt in Förderrichtung F vor dem ersten Abschnitt angeordnet ist.

Die Vortrennstation 4' umfasst eine Anzahl von Trennklappen 28, die federgespannt und drehbar an einer horizontalen Stütze 29 eines Gestells der Depalettiervorrichtung 1' gelagert sind. Aufgrund des Eigengewichtes einer oder mehrerer Reifen 2 verschwenken die Trennklappen 28 so weit nach unten, dass die Reifen 2 auf denselben nach unten gleiten und auf die untere Förderbahn 8 fallen können. Die Trennklappen 28 bewirken somit einem portionierten Weitertransport der Reifen 2 zu der Entzerrstation 9.

Alternativ können die Trennklappen 28 auch mit einem Antrieb verbunden sein, der die Trennklappen 28 aus einer horizontalen Ausgangslage in eine abgeschrägte Übergabelage verbringt, und zwar in der Abhängigkeit von einer Füllstandsmessung am Boden der Förderbahn 8 und dem aktuellen Neigungswinkel des Behälters 5 in der Stützstation 3. Vorzugsweise werden die Trennklappen 28 nacheinander nach unten geschwenkt.

Die Reifen 2 werden nach Auftreffen auf die untere Förderbahn 8 über die Steigungsstation 11 und der Querförderstation 13 der Vereinzelungsstation 17' zur Verfügung gestellt. Die Vereinzelungsstation 17' umfasst eine Trennförderbahn 30, die in einem solchen Abstand a zu einem förderstromabwärts gelegenen Ende 31 der Querförderstation 13 angeordnet ist, dass durch den so gebildeten Trennspalt 32, der sich zwischen dem Ende 31 der Querförderstation 13 und einem förderstromaufwärts gelegenen Ende 33 der Trennförderbahn 30 erstreckt, der unmittelbar auf der Förderbahn der Querförderstation 13 aufliegende Reifen 2, 2' durch den Trennspalt 32 weitergefördert wird zu einer ersten Förderbahn 34 der Vereinzelungsstation 17'. Ein eventuell unmittelbar auf der Förderbahn der Querförderstation 13 gestapelten obere Reifen 2" wird aufgrund des Höhenunterschiedes, der sich zwischen der Trennförderbahn 30 und der Förderbahn der Querförderstation 13 ergibt, mittels der Trennförderbahn 30 weitertransportiert zu einer zweiten Förderbahn 35 der Vereinzelungsstation 17'. Auf diese Weise erfolgt eine Separierung von gestapelten Reifen 2', 2" und Zuführung derselben zu der Beladestation 23'.

Alternativ kann die Trennförderbahn 30 auch in Förderrichtung F geneigt nach unten ausgebildet sein, so dass die Förderbahn 35 wegfallen kann. Alternativ kann statt der Trennförderbahn 30 auch ein solches Trennförderelement als Anschlag vorgesehen sein, das keine eigene Förderwirkung auf den Reifen 2" hat. An das Trennförderelement würde sich eine Förderbahn zum Weitertransport der Reifen 2" anschließen.

Im vorliegenden Ausführungsbeispiel schließt sich an die zweite Förderbahn 35 eine dritte Förderbahn 36 zur Umkehr der Förderrichtung F in Richtung einer gemeinsamen Förderbahn 37 der Beladestation 23' an. Die Förderbahnen 34, 35, 36 sind geneigt angeordnet und bewirken eine Zuführung der Reifen 2 an die Förderbahn 37 von gegenüberliegenden Seiten derselben her. Eine an der dritten Förderbahn 36 angeordneter Belegungssensor 38 zur Erkennung von gestapelten Reifen 2" am Eingang der Vereinzelungsstation 17' wird dazu genutzt, zuerst das Beladen der Förderbahn 37 von der ersten Förderbahn 34 her zu bewirken als von der gegenüberliegenden Förderbahn 36. Auf diese Weise ist gewährleistet, dass auf der Förderbahn 37 der Beladestation 23' stets ungestapelte Reifen 2 in einem Abstand zueinander abgelegt und in Förderrichtung F weitergeleitet werden, bis sie an den Teleskopgurtförder 26 weitergegeben werden.

Der Labyrinth-Förderweg ist in Förderrichtung F verschmälert und ansteigend ausgebildet ist, so dass die Reifen in Förderrichtung zunehmend vereinzelt werden.

Die erfindungsgemäßen Vorrichtungen ermöglichen eine sichere und kostengünstige Vereinzelung von Reifen. Es versteht sich, dass die vorstehend genannten Merkmale je für sich oder zu mehreren in beliebiger Kombination Verwendung finden können. Die beschriebenen Ausführungsbeispiele sind nicht als abschließende Aufzählung zu verstehen, sondern haben vielmehr beispielhaften Charakter für die Schilderung der Erfindung.

## Patentansprüche

1. Verfahren zum Depalettieren von Reifen (2, 2', 2"), die auf einem Träger (5) bereitgestellt werden, wobei die Reifen (2, 2', 2") über einen Labyrinth-Förderweg vereinzelt werden, und die Reifen (2, 2', 2") entlang unterschiedlich orientierter und/oder mit unterschiedlicher Fördergeschwindigkeit betriebener Förderbahnen (6, 8, 14, 18, 24) bewegt werden, bis sie sequenziell als ungestapelte Reifen (2') vorliegen, wobei die Reifen (2) auf mit unterschiedlichen Fördergeschwindigkeiten eingestellten Förderbahnen (8) und/oder Förderbahnsegmenten (8', 8", 8"') gefördert werden, und die Fördergeschwindigkeit der in Förderrichtung (F) nacheinander angeordneten Förderbahnen (8) bzw. Förderbahnsegmenten (8', 8", 8''') in Förderrichtung (F) ansteigen, **dadurch gekennzeichnet dass** die Förderrichtung (F) der mit unterschiedlichen Fördergeschwindigkeiten eingestellten Förderbahnen (8) bzw. Förderbahnsegmenten (8', 8", 8"') umgekehrt wird, sobald festgestellt wird, dass die Anzahl der auf dem in Förderrichtung (F) vorderen Förderbahn bzw. Förderbahnsegment (8"') angeordneten Reifen (2) größer ist als die auf dem förderstromaufwärts gelegenen benachbarten Förderbahnsegment (8") und/oder weiteren förderstromaufwärts gelegenen Förderbahnsegment (8') unterschiedlicher Fördergeschwindigkeit.

2. Verfahren nach Anspruch 1, **dadurch gekennzeichnet, dass** die Reifen (2, 2', 2") auf eine untere Förderbahn (8) geschüttet werden, auf der unteren Förderbahn (8) in geradliniger Förderrichtung (F) weitertransportiert werden zu einer förderstromabwärts gelegenen ansteigenden Förderbahn (12), deren Förderrichtung (F) sich unter einem spitzen Anstiegswinkel (α) von einer Erstreckungsebene der unteren Förderbahn (8) erhebt und dass die Reifen (2) förderstromabwärts der ansteigenden Förderbahn (12) auf eine Förderbahn (14) übergeben werden, die eine Förderrichtung (F) aufweist, die im Vergleich zu der Förderrichtung (F) der ansteigenden Förderbahn (12) in vertikaler und/oder in horizontaler Richtung unterschiedlich ist.

3. Verfahren nach Anspruch 1 oder 2, **dadurch gekennzeichnet, dass** die Reifen (2) von einer Förderbahn auf eine quer zur Förderrichtung (F) derselben geneigte Förderbahn (18) gefördert werden, die eine solche Neigung aufweist, dass ausschließlich die unmittelbar auf der geneigten Förderbahn (18) aufliegenden Reifen (2) weitertransportiert und die auf einem Reifen (2') gestapelten Reifen (2") die geneigte Förderbahn (18) verlassen.

4. Verfahren nach Anspruch 1 oder 2, **dadurch gekennzeichnet, dass** die Reifen (2, 2', 2") einem Trennförderelement (30) zugeführt werden, das in einem von der Dicke des Reifens (2, 2") abhängigen Abstand zu einem förderstromabwärts gelegenen Ende (31) der benachbarten Förderbahn (14) angeordnet ist, so dass durch den zwischen dem Trennförderelement (30) und der Förderbahn (14) gebildeten Trennspalt (32) ausschließlich der untere Reifen (2') eines Stapels von Reifen (2) hindurchgefördert wird.

5. Depalettiervorrichtung für Reifen, wobei die Depalettiervorrichtung ein Labyrinth-Förderweg vorsieht mit einer Anzahl von in unterschiedlicher Förderrichtung (F) verlaufenen Förderbahnen (6, 8, 12, 14, 18), wobei die in Förderrichtung (F) benachbarten Förderbahnen (6, 8, 12, 14, 18) bezüglich einer horizontalen Ebene und/oder einer vertikalen Ebene geneigt zueinander verlaufen, so dass die Reifen (2) förderstromabwärts des Labyrinth-Förderweges ungestapelt vorliegen, wobei die Depalettiervorrichtung eine Entzerrstation (9) mit unterschiedlicher Fördergeschwindigkeit eingestellten Förderbahnen und/oder Förderbahnsegmenten umfasst, und wobei die Reifen auf mit unterschiedlicher Fördergeschwindigkeit eingestellten Förderbahnen und/oder Förderbahnsegmenten gefördert werden, was zu einer Entzerrung bzw. Vereinzelung der Reifen führt, wobei die Förderbahn der Entzerrstation (9) eine untere Förderbahn (8) bilden, **dadurch gekennzeichnet, dass** eine quer zur Förderrichtung geneigte Förderbahn (18) vorgesehen ist, wobei der Neigungswinkel derart bemessen ist, dass bei Vorliegen eines Stapels von Reifen (2) nur der unterste Reifen (2'), also der unmittelbar auf der geneigten Förderbahn (18) aufliegende Reifen (2), weitergefördert wird, wobei der obere Reifen (2") eines Stapels von Reifen (2) seitlich aufgrund seines Eigengewichtes die geneigte Förderbahn (18) verlässt und auf die untere Förderbahn fällt, dass die geneigte Förderbahn (18) mit einer Horizontalebene einem spitzen Neigungswinkel im Bereich von 50° bis 70° einschließt, wobei die geneigte Förderbahn (18) zur Förderbahn (8) der Entzerrstation (9) hin geneigt ausgebildet ist, so dass von aufeinander gestapelten Reifen (2) der obere Reifen (2") von der geneigten Förderbahn (18) zu der Förderbahn (8) der Entzerrstation (9) hinunterfällt, während der untere Reifen (2'), der vollständig bzw. mit einer Flachzylinderseite auf der geneigten Förderbahn (18) angeordnet ist, in Förderrichtung (F) weitertransportiert wird, dass die heruntergefallenen Reifen (2") auf die Förderbahn (8) der Entzerrstation (9) fallen, so dass sie erneut den Labyrinth-Förderweg durchlaufen, und zwar so lange, bis sie als unterer Reifen (2') eines Stapels von Reifen (2) oder als einzelne Reifen (2) auf der geneigten Förderbahn (18) liegend einen förderstromabwärts gelegenen Ende derselben zugeführt werden.

6. Depalettiervorrichtung nach Anspruch 5, **dadurch gekennzeichnet, dass** sich an die Förderbahn die quer zur Förderrichtung (F) derselben geneigte Förderbahn (18) anschließt mit einem solchen Neigungswinkel, dass ausschließlich unmittelbar auf der geneigten Förderbahn (18) angeordnete Reifen (2) weiter gefördert werden, und dass die geneigte Förderbahn (18) entlang einer unteren Längsseite (19) derselben eine Führungseinrichtung (20) aufweist zur Führung der ausschließlich unmittelbar auf der geneigten Förderbahn (18) aufliegenden Reifen (2') in Förderrichtung (F).

7. Depalettiervorrichtung nach einem der Ansprüche 5 bis 6, **dadurch gekennzeichnet, dass** der Labyrinth-Förderweg in Förderrichtung (F) sich verschmälert und ansteigend ausgebildet ist, so dass die Reifen (2) in Förderrichtung (F) zunehmend vereinzelt werden.

8. Depalettiervorrichtung nach einem der Ansprüche 5 bis 7, **dadurch gekennzeichnet, dass** die Förderbahn (8) segmentiert ausgebildet ist mit einer Anzahl von Förderbahnsegmenten (8', 8", 8"'), die mit unterschiedlicher Fördergeschwindigkeit, vorzugsweise mit in Förderrichtung (F) ansteigende Fördergeschwindigkeit, betreibbar sind.

9. Depalettiervorrichtung nach einem der Ansprüche 5 bis 8, **dadurch gekennzeichnet, dass** eine Schüttstation (3) zum Schütten der Reifen (2, 2', 2") auf ein Förderband (8) der Entzerrstation (9) vorgesehen ist, dass förderstromabwärts zu der Entzerrstation (9) eine Steigungsstation (11, 15) enthaltend eine zu der Förderbahn (8) der Entzerrstation (9) ansteigende Förderbahn (12) aufweist, dass förderstromabwärts der Steigungsstation (11, 15) eine Querförderstation (13, 16) zur Umlenkung der Reifen (2) quer zur Förderrichtung (F) der förderstromaufwärts gelegenen Förderbahn (12) angeordnet ist.

10. Depalettiervorrichtung nach Anspruch 9, **dadurch gekennzeichnet, dass** zwischen der Schüttstation (3) und der Entzerrstation (9) eine Vortrennstation (4, 4') vorgesehen ist, auf die die Reifen (2) geschüttet werden.

11. Depalettiervorrichtung nach Anspruch 9, **dadurch gekennzeichnet, dass** förderstromabwärts der Steigungsstation (11, 15) und/oder der Querförderstation (13, 16) eine Vereinzelungsstation (17, 17') angeordnet ist zum Vereinzeln der Reifen (2), dass förderstromabwärts der Vereinzelungsstation (17, 17') eine Wendestation (21) zum Wenden der Reifen (2) vorgesehen ist, wobei die Reifen (2) gewendet werden, wenn an dem Reifen (2) ein Identifikationsmerkmal festgestellt wird, das auf einer der Förderbahn zugewandten Seite des Reifens (2) angeordnet ist.

## Claims

1. A method for depalletizing tires (2, 2', 2") which are supplied on a carrier (5), wherein
the tires (2, 2', 2") are isolated by means of a labyrinth conveying path, and
the tires (2, 2', 2") are moved along conveyor tracks (6, 8, 14, 18, 24) which have different orientations and/or which are operated at different conveying speeds, until they are available sequentially as unstacked tires (2'), wherein
the tires (2) are conveyed on conveyor tracks (8) and/or conveyor track segments (8', 8", 8"') which are set at different conveying speeds, and the conveying speeds of the conveyor tracks (8) or respectively conveyor track segments (8', 8", 8"') arranged one behind the other in the conveying direction (F) ascend in the conveying direction (F),
**characterized in that**
the conveying direction (F) of the conveyor tracks (8) or respectively conveyor track segments (8', 8", 8"'), which are set at different conveying speeds, is reversed as soon as it is established that the number of the tires (2) arranged on the front conveyor track or respectively conveyor track segment (81) in the conveying direction (F) is greater than that on the neighboring conveyor track segment (8") located up the conveying stream and/or the further conveyor track segment (8') located up the conveying stream having a different conveying speed.

2. The method according to Claim 1,
**characterized in that**
the tires (2, 2', 2") are tipped onto a lower conveyor track (8), are transported onwards on the lower conveyor track (8) in a straight conveying direction (F) to an ascending conveyor track (12) located down the conveying stream, the conveying direction (F) of which rises at an acute angle of climb (α) from an extension plane of the lower conveyor track (8) and the tires (2) are transferred down the conveying stream of the ascending conveyor track (12) to a conveyor track (14) which has a conveying direction (F) which is different in the vertical and/or in the horizontal direction compared with the conveying direction (F) of the ascending conveyor track (12).

3. The method according to Claim 1 or 2,
**characterized in that**
the tires (2) are conveyed from a conveyor track to a conveyor track (18) inclined transversely to the conveying direction (F) of the same, which has such an inclination that exclusively the tires (2) resting directly on the inclined conveyor track (18) are transported onwards and the tires (2") stacked on a tire (2') leave the inclined conveyor track (18).

4. The method according to Claim 1 or 2,
**characterized in that**
the tires (2, 2', 2") are fed to a separating conveying element (30) which is arranged at a distance, which is dependent on the thickness of the tire (2, 2"), from an end (31) of the neighboring conveyor track (14) located down the conveying stream, so that exclusively the lower tire (2') of a stack of tires (2) is conveyed through the separating gap (32) formed between the separating conveying element (30) and the conveyor track (14).

5. A depalletizing device for tires,
wherein the depalletizing device provides a labyrinth conveying path having a number of conveyor tracks (6, 8, 12, 14, 18) running in different conveying directions (F),
wherein the neighboring conveyor tracks (6, 8, 12, 14, 18) in the conveying direction (F) run inclined to one another with respect to a horizontal plane and/or a vertical plane, so that the tires (2) are available in an unstacked form down the conveying stream of the labyrinth conveying path, wherein the depalletizing device comprises a staggering station (9) having conveyor tracks and/or conveyor track segments set at different conveying speeds,
and wherein the tires are conveyed on conveyor tracks and/or conveyor track segments set at different conveying speeds, which results in a staggering or respectively isolation of the tires,
wherein the conveyor track of the staggering station (9) forms a lower conveyor track (8), **characterized in that** a conveyor track (18) inclined transversely to the conveying direction is provided,
wherein the angle of inclination is dimensioned in such a manner that, in the event of a stack of tires (2) being present, only the lowest tire (2'), that is to say the tire (2) resting directly on the inclined conveyor track (18), is conveyed onwards,
wherein the upper tire (2") of a stack of tires (2) leaves the inclined conveyor track (18) laterally due to its own weight and falls onto the lower conveyor track, the inclined conveyor track (18) having a horizontal plane encloses an acute angle of inclination in the range from 50° to 70°, wherein the inclined conveyor track (18) is configured inclined towards the conveyor track (8) of the staggering station (9), so that from tires (2) stacked one upon the other, the upper tire (2") falls down from the inclined conveyor track (18) to the conveyor track (8) of the staggering station (9) while the lower tire (2'), which is arranged completely or respectively with a flat cylindrical side on the inclined conveyor track (18), is transported onwards in the conveying direction (F), the fallen down tires (2") fall onto the conveyor track (8) of the staggering station (9), so that they run through the labyrinth conveying path again and do so until such time as they are fed as the bottom tire (2') of a stack of tires (2) or as individual tires (2) lying on the inclined conveyor track (18) to an end of the same which is located down the conveying stream.

6. The depalletizing device according to Claim 5,
**characterized in that**
the conveyor track is joined by the conveyor track (18) inclined transversely to the conveying direction (F) of the same at such an angle of inclination that exclusively tires (2) arranged directly on the inclined conveyor track (18) are conveyed onwards, and the inclined conveyor track (18) has a guiding device (20) along a lower longitudinal side (19) of the same for guiding exclusively the tires (2') resting directly on the inclined conveyor track (18) in the conveying direction (F).

7. The depalletizing device according to any one of Claims 5 to 6,
**characterized in that**
the labyrinth conveying path is configured in a narrowed and ascending manner in the conveying direction (F), so that the tires (2) are increasingly isolated in the conveying direction (F).

8. The depalletizing device according to any one of Claims 5 to 7,
**characterized in that**
the conveyor track (8) is configured in a segmented manner with a number of conveyor track segments (8', 8", 8'''), which are operatable at different conveying speeds, preferably at ascending conveying speeds in the conveying direction (F).

9. The depalletizing device according to any one of Claims 5 to 8,
**characterized in that**
a tipping station (3) is provided for tipping the tires (2, 2', 2") onto a conveyor belt (8) of the staggering station (9),
that down the conveying stream from the staggering station (9) there is an incline station (11, 15) containing a conveyor track (12) which ascends towards the conveyor track (8) of the staggering station (9),
that down the conveying stream from the incline station (11, 15) a transverse conveying station (13, 16) is arranged for deflecting the tires (2) transversely to the conveying direction (F) of the conveyor track (12) located up the conveying stream.

10. The depalletizing device according to Claim 9,
**characterized in that**
between the tipping station (3) and the staggering station (9), a preliminary separating station (4, 4') is provided, onto which the tires (2) are tipped.

11. The depalletizing device according to Claim 9
**characterized in that**
down the conveying stream from the incline station (11, 15) and/or the transverse conveying station (13, 16) an isolating station (17, 17') is arranged for isolating the tires (2), and down the conveying stream from the isolating station (17, 17') a turning station (21) is provided for turning the tires (2), wherein the tires (2) are turned, if an identification feature is established on the tire (2), said identification feature being arranged on a side of the tire (2) facing the conveyor track.

## Revendications

1. Procédé destiné à la dépalettisation de pneus (2, 2', 2"), qui sont mis à disposition sur un support (5), sachant que les pneus (2, 2', 2") sont séparés individuellement sur une bande de transport en labyrinthe et que les pneus (2, 2', 2") sont déplacés le long de bandes de transport (6, 8, 14, 18, 24) différemment orientées et / ou fonctionnant à une vitesse de transport différente, jusqu'à ce qu'ils se présentent séquentiellement en tant que pneus (2') non empilés, sachant que les pneus (2) sont transportés sur des bandes de transport (8) et / ou des segments de bandes de transport (8', 8", 8"') réglés à des vitesses de transport différentes, et que la vitesse de transport des bandes de transport (8) respectivement des segments de bandes de transport (8', 8", 8"'), disposes les uns derrière les autres dans la direction de transport (F), augmente dans la direction de transport (F),
**caractérisé en ce que**
la direction de transport (F) des bandes de transport (8) respectivement des segments de bandes de transport (8', 8", 8"'), réglés à des vitesses de transport différentes, est renversée dès qu'il est constaté que le nombre des pneus (2), disposés sur la bande de transport respectivement le segment de bande de transport (8"') le plus en avant dans la direction de transport est plus élevé que celui de ceux sur le segment de bande de transport (8") avoisinant en amont et / ou de l'autre segment de bande de transport (8') en amont dans la direction de transport fonctionnant à une vitesse de transport différente.

2. Procédé selon la revendication 1, **caractérisé en ce que** les pneus (2, 2', 2") sont déversés en vrac sur une bande de transport (8) inférieure, le transport se poursuivant sur la bande de transport (8), dans une direction de transport (F) linaire à destination d'une bande de transport (12) ascendante, située en aval, dont la direction de transport (F) s'élève en angle ascendant aigu (α) par rapport à un plan de projection de la bande de transport (8) inférieure, et que les pneus (2) sont transférés, en aval dans la direction de transport de la bande de transport ascendante (12), sur une bande de transport (14), qui présente une direction de transport (F), qui, en comparaison avec la direction de transport (F) de la bande de transport ascendante (12) diffère dans la direction verticale et / ou la direction horizontale.

3. Procédé selon revendication 1 ou 2, **caractérisé en ce que** les pneus (2) sont transportés d'une bande de transport sur une station d'échelonnement (9), en pente transversale par rapport à la direction de transport (F) de celle-ci, présente une inclinaison telle que seuls les pneus (2) reposant directement sur la bande de transport inclinée (18) continuent à être transportées et que les pneus (2"), empilés sur un autre pneu (2') quittent la bande de transport inclinée (18).

4. Procédé selon revendication 1 ou 2, **caractérisé en ce que** les pneus (2, 2', 2") sont conduits à un élément de transport de séparation (30), qui est disposé à un intervalle dépendant de l'épaisseur d'un pneu (2, 2"), à une extrémité (31) de la bande de transport voisine (14), qui est située en aval dans la direction de transport, de manière à ce que seuls les pneus inférieurs (2') d'une pile de pneus (2) soient conduits à travers la fente de séparation (32), qui est formée entre l'élément de transport de séparation (30) et la bande de transport (14).

5. Dispositif de dépalettisation de pneus, sachant que le dispositif de dépalettisation prévoit un chemin de transport en labyrinthe avec un nombre de bandes de transport (6, 8, 12, 14, 18) orientées dans des directions de transport (F) différents, sachant que les bandes de transport (6, 8, 12, 14, 18) avoisinantes dans la direction de transport (F) s'inclinent les unes vers les autres par rapport à un plan horizontal et / ou un plan vertical, de manière à ce que les pneus (2) se présentent non empilés, en aval dans la direction de transport du chemin de transport en labyrinthe, sachant que le dispositif de dépalettisation comprend une station d'échelonnement (9) avec des bandes de transport t / ou des segments de bandes de transport réglés à des vitesses de transport différentes, et sachant que les pneus sont transportés sur des bandes de transport et / ou des segments de bandes de transport réglés à des vitesses de transport différentes, ce qui conduit à un échelonnement respectivement à une séparation individuelle des pneus, sachant que la bande de transport de la station d'échelonnement (9) forme une bande de transport inférieure (8), **caractérisé en ce qu'**est prévue une bande de transport (18), qui est inclinée transversalement par rapport à la direction de transport, sachant que l'angle d'inclinaison est calculé de manière à ce que, en présence d'une pile de pneus (2), seuls le pneu situé le plus en-dessous (2'), donc le pneu (2) qui repose directement sur la bande de transport inclinée (18), continue à être transporté, sachant que le pneu supérieur (2") d'une pile de pneus (2), en raison de son propre poids, quitte latéralement la bande de transport inclinée (18) et tombe sur la bande de transport inférieure, que la bande de transport inclinée (18) forme avec un plan horizontal un angle d'inclinaison, qui est situé dans un domaine allant de 50 ° jusqu'à 70 °, sachant que la bande de transport inclinée (18) est réalisée en pente vers la bande de transport (8) de la station d'échelonnement (9), de manière à ce que des pneus empilés les uns sur les autres (2), le pneu supérieur (2") tombe de la bande de transport inclinée (18) sur la bande de transport (8) de la station d'échelonnement (9), tandis que le pneu inférieur (2'), qui repose complètement, respectivement avec un côté cylindrique plat, sur la bande de transport inclinée (18) continue à être transporté dans la direction de transport (8), que les pneus (2") tombent sur la bande de transport 8)de la station d'échelonnement (9) de sorte qu'ils parcourent de nouveau le chemin de transport en labyrinthe, et ceci jusqu'à ce qu'ils soient conduits à une extrémité du chemin de transport, situé en aval de celui-ci, en tant que pneu inférieur (2') d'une pile de pneus (2) ou en tant que pneu individuel (2) disposés sur la bande de transport inclinée (18).

6. Dispositif de dépalettisation selon la revendication 5, **caractérisé en ce que** la bande de transport inclinée (18), inclinée transversalement par rapport à la direction de transport (F) de la bande de transport, se raccorde à celle-ci avec un angle d'inclinaison tel que seuls les pneus (2) disposés directement sur la bande de transport inclinée (18) continuent à être transportés, et que la bande de transport inclinée (18) présente, le long de l'un de ses côtés longitudinaux (19) un dispositif de guidage (20) qui est destiné à conduire dans la direction de transport (F) uniquement les pneus (2') reposant directement sur la bande de transport inclinée (18).

7. Dispositif de dépalettisation selon l'une des revendications 5 à 6, **caractérisé en ce que** Le chemin de transport en labyrinthe se rétrécit et s'élève dans la direction de transport (F) de manière à ce que les pneus (2) soient de plus en plus séparés individuellement les uns des autres dans la direction de transport (F).

8. Dispositif de dépalettisation selon l'une des revendications 5 à 7, **caractérisé en ce que** la bande de transport (8) est de conception segmentée, comprenant un nombre de segments de bande de transport (8', 8", 8"'), qui peuvent fonctionner à des vitesses de transport différentes, de préférence à une vitesse de transport croissante dans la direction de transport (F).

9. Dispositif de dépalettisation selon l'une des revendications 5 à 8, **caractérisé en ce qu'**une station de déversement en vrac (3) est prévue pour le déversement en vrac des pneus (2, 2', 2") sur une bande de transport (8) de la station d'échelonnement (9), que, dans la direction de transport en aval, par rapport à la station d'échelonnement (9), une station ascendante (11, 15) présente une bande de transport (12) qui monte vers la bande de transport (8) de la station d'échelonnement (9), que, en aval de la station ascendante (11, 15), dans la direction de transport, est disposée une station de transport transversal (13, 16) pour la déviation des pneus (2) transversalement par rapport à la direction de transport (F) de la bande de transport (12), située en amont, dans la direction de transport.

10. Dispositif de dépalettisation selon la revendication 9, **caractérisé en ce que**, entre la station de déversement en vrac (3) et la station d'échelonnement (9), est prévue une station de pré-séparation individuelle (4, 4'), sur laquelle les pneus (2) sont déversés.

11. Dispositif de dépalettisation selon la revendication 9, **caractérisé en ce que**, dans la direction de transport, en aval de la station ascendante (11, 15), et / ou de la station de transport transversal (13, 16), est disposée une station de séparation individuelle (17, 17') pour séparer les pneus (2) un à un, que, dans la direction de transport, en aval de la station de séparation individuelle (17, 17'), est prévue une station de retournement (21), destinée à retourner les pneus (2), sachant que les pneus (2) sont retournés lorsque, sur le pneu (2), est constatée une caractéristique d'identification, qui est disposée sur un côté du pneu (2) orienté vers la bande de transport.
